# EUROPEAN PATENT SPECIFICATION

(11) **EP 2 175 741 B1**
(45) Date of publication and mention of the grant of the patent: **29.10.2014**
(21) Application number: 08787178.6
(22) Date of filing: 13.08.2008
(51) Int. Cl.: A23G 3/52

(54) **MARSHMALLOW-TYPE AERATED CONFECTIONERY AND METHOD OF PREPARATION**
Mäusespeck-ähnliche beluftete Süsswaren und Verfahren zur Herstellung
CONFISERIE AEREE DE TYPE GUIMAUVE ET PROCEDE DE PREPARATION

(30) Priority: 13.08.2007 FR 0757052; 13.08.2007 US 955468 P
(43) Date of publication of application: 21.04.2010
(73) Proprietor: Rousselot B.V., 5691 NM Son (NL)
(72) Inventor: STEVENS, Paul, B-9042 Gent Mendonk (BE); GUEDJ, Sylviane, F-84800 L'isle Sur La Sorgue (FR); CAPDEPON, Claude, F-84470 Chateauneuf De Gadagne (FR); GIRAUD, Alain, F-84210 Pernes Les Fontaines (FR)
(74) Representative: Algemeen Octrooi- en Merkenbureau B.V.
(86) International application number: PCT/EP2008/060627
(87) International publication number: WO 2009/021968

(56) References cited:
- JP-A- 2005 295 841
- SU-A1- 1 732 910
- UA-A- 69 302
- US-A- 3 206 315
- US-A- 4 323 588
- US-A- 5 236 730
- ANONYMOUS: "Pectin aids product development and process control." FOOD REVIEW, vol. 23, no. 11, 1996, page 43, XP008089523
- SCHRIEBER R: "Der Einsatz von Gelatine in Marshmallows." GORDIAN, vol. 72, no. 4, 1972, page 137, XP008089522

## Description

The subject of the present invention is an item of marshmallow-type aerated confectionery, and also a method for its preparation.

Items of aerated confectionery are very popular foodstuffs. An example of aerated confectionery is the marshmallow. Marshmallows exist in different formats. The basic composition of marshmallows comprises water, a disaccharide such as sucrose, a monosaccharide such as dextrose or corn syrup, and gelatin. It is also possible to incorporate flavours and colouring agents into this basic composition.

To prepare marshmallows, the sugars are mixed with the water and are heated to form a syrup having a high solids content. The syrup is then mixed with an aqueous dispersion of a colloid, and then whipped to obtain the desired volume by means of an expanding step. The colloid customarily used is gelatin.

The marshmallows marketed at present are items of confectionery having a pH close to neutral between pH 5 and pH 6. In fact, only neutral flavours such as vanilla are compatible with this type of confectionery.

To prepare marshmallows with flavours such as citrus fruit flavours, it has been proposed to prepare slightly acid marshmallows. However, such products have the drawback of not having a sufficiently intense and lasting flavour. It has also been proposed to prepare acid marshmallows by incorporating a large amount of acid into the standard recipe However, in such a case, this strong acidification leads to the formation of an unstable foam which shrinks and compromises the stability of the expansion and therefore the preservation of the product obtained.

There is thus no satisfactory method at present which makes it possible to obtain an item of marshmallow-type aerated confectionery having an acid pH, and into which it is possible to incorporate a fruit flavour, the fruit flavour requiring an acid pH in order to be released and to develop.

JP 2005295841 and US 4 323 588 relate to a method of preparation of a marshmallow-type aerated confectionery comprising an aerated gelatin network, stabiliser and acid.

The aim of the present invention is to provide an acid marshmallow having satisfactory organoleptic properties.

Another aim of the present invention is to provide a satisfactory method making it possible to obtain an item of marshmallow-type aerated confectionery having an acid pH.

The present invention concerns an item of marshmallow-type aerated confectionery having a density of 0.10 to 0.6 g/cm³ comprising an aerated gelatin network and as a stabiliser for said network, 5% to 20% by weight of pectin for 80% to 95% by weight of gelatin said confectionery having a pH of 2.2 to 3.5, especially 2.5 to 3.4, and preferably 2.6 to 3.2.

The expression "aerated gelatin network" designates gelled gelatin containing air, especially that obtained by expanding.

The expression "network stabiliser" designates a compound which, when it is brought into contact with the gelatin, makes it possible to preserve the properties of said network.

The term "marshmallow-type aerated confectionery" designates a sweet or candy having a spongy, resilient consistency based on gelatin and sugar. The term "marshmallow" generally designates marsh mallow paste in the form of pastel-coloured cubes.

The name "marshmallow" and the nature of this confectionery come from a medicinal extract of the root of the Marsh Mallow (*althae officinalis*). Marshmallows are conventionally prepared by suspending in a sugar syrup a foam based in particular on colloidal matter.

Marshmallows may also be designated by the term "guimauves" (marsh mallows).

Preferably, the composition of the marshmallow-type aerated confectionery of the invention does not include starch. In fact, within the framework of the invention, starch is used only for the shaping of the marshmallows at the end of the preparation process, i.e. for the packaging of the marshmallows. Thus, starch does not form part of the internal composition of the marshmallows.

The confectionery according to the invention is characterized by the surprising combination of stability of expansion and an acidity allowing the flavours, especially fruit flavours, to develop.

Thus, the amount of acid or of the mixture of acids added will be determined by a person skilled in the art according to the pH desired.

The present invention concerns an item of marshmallow-type aerated confectionery as defined above, characterized in that the gelatin network stabiliser is pectin.

Thus, the present invention concerns an item of marshmallow-type aerated confectionery comprising gelatin and pectin, characterized in that said confectionery has a pH of 2.2 to 3.4, especially 2.6 to 3.2.

Pectin (or E440) basically consists of molecules of D-galacturonic acid which are connected to one another by α-(1,4)-glucosidic bonds to form polygalacturonic acid and where the carboxyl groups are partially esterified by methanol. Thus, pectin is a methoxylated ester of polygalacturonic acid. It may be obtained in particular from citrus fruit skins or from apple pulp.

Among the pectins, the rapid-set pectins and the slow-set pectins are distinguished, as described in GB 1 474 990, US 3 835 111, US 4 241 099 or CH 599 251.

According to a preferred embodiment, the pectin used is an extra-slow-set pectin which has a gelling speed close to that of gelatin.

The gelling of the pectin used may be characterised by its setting time. Preferably, the extra-slow-set pectin used has a setting time of 500 sec. or more, and especially of 500 sec. to 520 sec.

The setting time is defined as corresponding to the moment when gelling starts, and is measured by the Joseph and Bayer test (Joseph, G.H., Bayer, W.F. (1949) *Food Technol.,* 3.18-22).

An item of marshmallow-type aerated confectionery comprising an aerated network of gelatin and extra-slow-set pectin and an acid imparting an acid pH to the confectionery is also a subject of the invention.

The gelling composition according to the invention is characterized in that it comprises a specific pectin, i.e. an extra-slow-set pectin. This specific pectin gels at a low temperature, i.e. at a temperature below 60°C.

Pectin may also be characterized by its degree of esterification or its galacturonic acid content.

Thus, the pectin used for the preparation of the confectionery according to the invention has a degree of esterification of 50% to 65%, and preferably of 51% to 59%.

The pectin used within the framework of the present invention may also be an amido pectin, the degree of amidation of which is 4% to 9%.

For example, the pectin used within the framework of the present invention is "Amid CS 005" pectin by Herbstreith & Fox KG, the degree of esterification of which is 55%, the degree of amidation is 8% and the galacturonic acid content is 90%.

The choice of a specific pectin, i.e. an extra-slow-set pectin, is important for the subsequent use of the gelling composition, especially in order to avoid too rapid gelling, taking place before the shaping of the expanded product.

Preferably, the pectin used comprises gelification-retarding salts, preferably selected from calcium, sodium and potassium salts.

The confectionery according to the invention comprises from 5% to 20% by weight of pectin for 80% to 95% by weight of gelatin.

When the confectionery comprises more than 20% by weight of pectin for 80% to 95% by weight of gelatin, problems of evaporation of the water are encountered: the amount of water to be used to dissolve the pectin is too great and does not evaporate sufficiently.

When the confectionery comprises less than 5% by weight of pectin for 80% to 95% by weight of gelatin, the stabilisation of the gelatin by the pectin is then insufficient and does not therefore allow a satisfactory product to be obtained.

Preferably, the confectionery according to the invention comprises 5 to 10% by weight of pectin for 90 to 95% by weight of gelatin.

More preferably, the confectionery according to the invention comprises 10% by weight of pectin for 90% by weight of gelatin.

Preferably, the gelatin used is obtained by acid means. The gelatin preferably has a pH of 4 to 6, thereby making it possible to obtain an improved foaming power.

The pectin Is also preferably acid. It has in particular a pH of 3.5 to 5, especially of 3.5 to 4.5, and preferably of 4.1.

The present Invention concerns an item of marshmallow-type aerated confectionery comprising:
- from 3% to 6% by weight of the whole formed by the gelatin and pectin based on the total weight of said confectionery, and
- at least one acid, selected. In particular from citric acid, lactic acid, malic acid and tartaric acid.

The marshmallows according to the present invention are characterized in that they contain a foodstuff acid or a mixture of foodstuff acids, in order to ensure that the marshmallows have an acid pH. Within the framework of the present invention, the acid has a double function, i.e. making it possible to have a sufficiently acid pH for suitable gelling of the pectin and to bring out the flavour used.

Preferably, the marshmallows of the present invention contain citric acid.

The confectionery as defined above may also comprise a humidity stabiliser.

Among the humidity stabilisers, polyols may especially be mentioned. Among the polyols, glycerol, polyethyleneglycol (PEG), maltitol, xylitol and sorbitol are preferably used.

Preferably, sorbitol is used, and may also be used as a humectant, water-retaining agent or stabiliser, or also for its anti-crystallising action.

The use of a humidity stabiliser permits improved humidification and thereby makes it possible to slow down the aging of the marshmallows by dehydration.

According to a preferred embodiment, the confectionery of the invention is characterized in that it contains from 1% to 5%, and preferably 3%, by weight of a humidity stabiliser based on the total weight of said confectionery.

Advantageously, the confectionery according to the invention also comprises at least one fruit flavour, especially a citrus fruit flavour.

Among the citrus fruit flavours, lemon, grapefruit or orange flavours may be mentioned.

In addition, it is also possible to use a mixture of flavours.

Among the fruit flavours, the flavours of blueberry, blackcurrant, strawberry, gooseberry, grape, bilberry, pineapple, plum, quince, apple, apricot, cherry, kiwi, lychee, mango, papaya, passionfruit, raspberry, rhubarb or water-melon may also be mentioned.

Advantageously, the confectionery according to the invention may also comprise a colouring agent or a mixture of colouring agents.

The marshmallows according to the invention are therefore acid marshmallows characterised in that the releasing of the flavour is rapid, or even instantaneous, in the mouth of the consumer, and also in that the flavour is clearly perceived by the consumer.

The confectionery according to the present invention has a density of 0.10 to 0.6 g/cm³, and especially of 0.13 to 0.3, and preferably of 0.2 to 0.25.

The marshmallows according to the invention may be either extruded marshmallows, the density of which varies preferably from 0.10 to 0.3., or deposited marshmallows, the density of which varies preferably from 0.5 to 0.6.

According to another advantageous embodiment, the confectionery according to the present invention comprises gelatin having a bloom of 100 g to 300 g., especially 125 g to 275 g, and preferably 180 g to 250 g.

The gelling power of the gelatin is expressed as bloom value. The bloom (gel strength) is the maximum force measured during the penetration of a standardised cylinder 12.7 mm in diameter to a depth of 4 mm and at a speed of 0.5 to 1 mm/second into a 6.67% gel matured for 16 to 18 hours at 10°C in a specific flask (JAOAC 31,511 (1948); 52, 401 (1969) and 53, 386 (1970)).

The bloom also makes it possible to determine the gelatinous stability of the gelatin. The higher the bloom, the higher the gelling power of the gelatin.

The confectionery according to the invention is also characterized in that it comprises gelatin having a viscosity of 2.8 mPa.sec. to 5 mPa.sec, especially for a bloom of 180 to 250 g.

The viscosity of the gelatin is defined by its dynamic viscosity when it is tested as a 6.67 % solution in water at 60°C.

The viscosity of a 6.67% gelatin solution is determined at 60°C by measuring the flow time of 100 ml of the solution through a standard pipette.

The present invention also concerns a method of preparation of an item of marshmallow-type aerated confectionery as defined above, comprising the following steps:
a) a step of dissolving, in water, the gelatin and the pectin,
b) a step of mixing a sugar syrup and the mixture obtained at the end of step a),
c) a step of adding, either at the end of step a) or step b), and preferably at the end of step b), at least one acid, selected in particular from citric acid, lactic acid, malic acid and tartaric acid, and, where necessary, at least one fruit flavour and, if necessary, at least one colouring agent, and
d) a step of expanding the product obtained at the end of the preceding step.

According to an advantageous embodiment, step a) of the method of preparation as defined above also comprises the dissolving of at least one sugar in water.

Preferably, the sugar used during this step is sucrose.

It is also possible to use a mixture of sugars during step a).

This step makes it possible to obtain a perfectly homogeneous powder before dissolving in water, thereby avoiding clumping. Thus the particle size is suitable and this prevents the powder being too fine.

According to an advantageous embodiment, step a) of the method of preparation as defined above is carried out in water heated to a temperature of from 80°C to 90°C, and said gelling mixture thus obtained is maintained at 80°C for 30 minutes.

Within the framework of the method of the invention, the sugar syrup is prepared by mixing at least one sugar, glucose syrup, and if necessary a humidity stabiliser as defined above, with water.

Within the framework of the preparation of the sugar syrup, the sugar used is sucrose.

It is also possible to use a mixture of sugars during step b).

The total amount of sugar, corresponding to the amount of sucrose and of glucose syrup, is 70% to 75% by weight based on the weight of the finished product, i.e. the confectionery.

Step b) also provides for the use of a glucose syrup, the dextrose equivalent of which is preferably 60.

It is pointed out here that the term "dextrose equivalent" or DE refers to the percentage of reducing sugars contained in the syrup, calculated as the dextrose (or D-glucose) as dry matter. It is therefore considered that the DE indicates the percentage of reducing sugars contained in the syrup.

The glucose syrup makes it possible to have a viscosity suitable for facilitating the handling of the starting ingredients.

According to an advantageous embodiment, the sugar syrup is heated to a temperature of from 120°C to 130°C, preferably to a temperature of 126°C, in order to eliminate the excess water. It is then allowed to cool to a temperature of from 80°C to 110°C, preferably to a temperature of 100°C.

Particularly advantageously, step b) is followed by a step of cooling said mixture to a temperature of from 50°C to 70°C, preferably to a temperature of 60°C.

Preferably, step c) of the method of preparation as defined above is followed by a step of agitating so as to obtain a homogeneous whole, then by a step of transferring said homogeneous whole into an expanding device, preferably at continuous pressure.

According to a particular embodiment, the method of preparation according to the invention may comprise a final step of extrusion.

The present invention also concerns an item of marshmallow-type aerated confectionery as obtained according to the method as defined above.

### EXAMPLES

The gelling composition was prepared by mixing pectin and gelatin.

The gelatin used is Rousselot^{®} 200 PS gelatin (extracted from pigskin). It has the following characteristics:

| | |
|---|---|
| Gel strength (bloom) | 190 - 210 g |
| Viscosity | 2.25 - 3.25 mPa.sec. |
| pH | 4.5 - 5.5 |

The pectin used is PG717CS (Cargill^{®}) pectin or H&F (Herbstreith & Fox^{®}) AS511 pectin.

The prepared gelling composition contains 90% by weight of gelatin and 10% by weight of pectin.

The protocols described below make it possible to obtain 7 kg of finished product.

### Example 1 - Preparation of extruded marshmallows

A gelling composition containing 90% by weight of (Rousselot^{®} 200 PS) gelatin and 10% by weight of PG717CS (Cargill^{®}) pectin is prepared.

0.280 kg of the previously obtained gelling composition, 0.140 kg of sugar, were dissolved in 1.050 kg of hot water (80°C) and the whole (gelling mixture) was maintained at 80°C for 30 minutes. The sugar mass was then prepared by cooking 2.7475 kg of sugar, 2.9575 kg of glucose syrup (DE = 60-62), 0.210 kg of sorbitol and 0.980 kg of water in an open receiver at 126°C. The sugar mass was then allowed to cool to 100° C. The sugar mass and the gelling mixture were then mixed and allowed to cool to 60°C. The following step consisted of adding 0.182 kg of citric acid (50% solution), the colouring agents (0.035 kg) and the flavours (0.0245 kg of lemon flavour) and of agitating the whole until a homogeneous mass was obtained. Finally, the total mass obtained was transferred into a Mondomix type continuous pressure expanding device.

The equipment used has the following parameters:
- inlet pressure : 6 bar
- mixing head pressure : 5 bar
- rotation speed of inlet pump : 40 rpm
- rotation speed of mixing head : 600 rpm
- air pressure : 70.6 mm
- inlet temperature : 61°C
- outlet temperature : 51.9°C
- double wall temperature (cold) : 20°C
- double wall temperature (hot) : 80°C

After extrusion, the acid marshmallow has a total soluble solids content (TSS) of 84% and a density of 0.25 g/cm³.

The marshmallows obtained according to this example have a pH of 2.59.

### Example 2 - Preparation of extruded marshmallows

A gelling composition containing 90% by weight of (Rousselot^{®} 200 PS) gelatin and 10% by weight of AS511 (Herbstreith & Fox^{®}) pectin is prepared.

0.280 kg of the previously obtained gelling composition, 0.140 kg of sugar, were dissolved in 1.050 kg of hot water (80°C) and the whole (gelling mixture) was maintained at 80°C for 30 minutes. The sugar mass was then prepared by cooking 2.7475 kg of sugar, 2.9575 kg of glucose syrup (DE = 60-62), 0.210 kg of sorbitol and 0.980 kg of water in an open receiver at 126°C. The sugar mass was then allowed to cool to 100° C. The sugar mass and the gelling mixture were then mixed and allowed to cool to 60°C. The following step consisted of adding 0.182 kg of citric acid (50% solution), the colouring agents (0.035 kg) and the flavours (0.0245 kg of lemon flavour) and of agitating the whole until a homogeneous mass was obtained. Finally, the total mass obtained was transferred into a Mondomix type continuous pressure expanding device.

The equipment used has the following parameters:
- inlet pressure : 6 bar
- mixing head pressure : 3 bar
- rotation speed of inlet pump : 40 rpm
- rotation speed of mixing head : 600 rpm
- air pressure : 67.5 mm
- inlet temperature : 68.3°C
- outlet temperature : 59.1°C
- double wall temperature (cold) : 20°C
- double wall temperature (hot) : 80°C

After extrusion, the acid marshmallow has a total soluble solids content (TSS) of 82% and a density of 0.15 g/cm³.

The marshmallows obtained according to this example have a pH of 2.61.

### Packaging of the extruded marshmallow

After extrusion, the paste in the form of a ribbon is stored at ambient temperature (20 to 25°C) for 2 hours.

The paste in the form of a ribbon is then cut and rolled in a mixture of icing sugar and starch (50/50).

The samples are then wrapped in plastic bags and stored at ambient temperature (20 to 25°C).

## Claims

1. Marshmallow-type aerated confectionery having a density of 0.10 to 0.6 g/cm³, comprising an aerated gelatin network and as a stabiliser for said network, 5% to 20% by weight of pectin for 80% to 95% by weight of gelatin, said confectionery having a pH of 2.2 to 3.5.

2. Marshmallow-type aerated confectionery according to claim 1, **characterized in that** the pectin has a setting time of 500 sec. or more.

3. Confectionery according to claim 1 or 2, comprising:
- from 3% to 6% by weight of the whole formed by the gelatin and pectin based on the total weight of said confectionery, and
- at least one acid, selected in particular from citric acid, lactic acid, malic acid and tartaric acid.

4. Confectionery according to any one of claims 1 to 3, **characterized in that** it comprises a humidity stabiliser selected in particular from polyols such as glycerol, polyethyleneglycol (PEG), maltitol, xylitol and sorbitol, and **in that** it preferably contains from 1 % to 5%, and preferably 3%, by weight of said humidity stabiliser based on the total weight of said confectionery.

5. Confectionery according to any one of claims 1 to 4, **characterized in that** it comprises at least one fruit flavor, especially at least one citrus fruit flavor, and optionally at least one coloring agent.

6. Confectionery according to any one of claims 1 to 5, **characterized in that** it has a density of 0.13 to 0.3 g/cm³, preferably of 0.2 to 0.25 g/cm³.

7. Confectionery according to any one of claims 1 to 6, **characterized in that** it comprises gelatin having a bloom of 100 g to 300 g, especially 125 g to 275 g, and preferably 180 g to 250 g.

8. Confectionery according to any one of claims 1 to 7, **characterized in that** it comprises gelatin having a viscosity of 2.8 mPa.sec. to 5 mPa.sec. especially for a bloom of 180 to 250 g.

9. Method of preparation of an item of marshmallow-type aerated confectionery according to any one of claims 1 to 8, comprising the following steps:
a) a step of dissolving in water the gelatin and the pectin,
b) a step of mixing a sugar syrup and the mixture obtained at the end of step a),
c) a step of adding, either at the end of either step a) or step b), and preferably at the end of step b), at least one acid, selected in particular from citric acid, lactic acid, malic acid and tartaric acid, and, if necessary, at least one fruit flavor and, if necessary, at least one coloring agent, and
d) a step of expanding the product obtained at the end of the preceding step.

10. Method of preparation according to claim 9, **characterized in that** step a) also comprises dissolving at least one sugar in water.

11. Method of preparation according to claim 9 or 10, **characterized in that** step a) is carried out in water heated to a temperature of from 80°C to 90°C.

12. Method of preparation according to any one of claims 9 to 11, **characterized in that** the sugar syrup is prepared by mixing at least one sugar, glucose syrup, and, if necessary, a humidity stabiliser as defined in claim 4, with water, and **in that** said sugar syrup is heated to a temperature of from 120°C to 130°, preferably to a temperature of 126°C, and **in that** it is then allowed to cool to a temperature of from 80°C to 110°C, preferably to a temperature of 100°C.

13. Method of preparation according to any one of claims 9 to 12, **characterized in that** step b) is followed by a step of cooling said mixture to a temperature of from 50°C to 70°C, preferably to a temperature of 60°C.

14. Method of preparation according to any one of claims 9 to 13, **characterized in that** step c) is followed by a step of agitating so as to obtain a homogeneous whole, then by a step of transferring said homogeneous whole into an expanding device, preferably at continuous pressure.

15. Method of preparation according to any one of claims 9 to 14, **characterized in that** it comprises a final step of extrusion.

## Patentansprüche

1. Marshmallowartige mit Luft versetzte Süßware mit einer Dichte von 0,10 bis 0,6 g/cm³, mit einem mit Luft versetzten Gelatinenetzwerk sowie, als Stabilisator für das Netzwerk, 5 bis 20 Gew.-% Pektin bei 80 bis 95 Gew.-% Gelatine, wobei die Süßware einen pH-Wert von 2,2 bis 3,5 aufweist.

2. Marshmallowartige mit Luft versetzte Süßware nach Anspruch 1, **dadurch gekennzeichnet, dass** das Pektin eine Erstarrungszeit von 500 s oder mehr hat.

3. Süßware nach Anspruch 1 oder 2, mit:
- 3 bis 6 Gew.-% des von der Gelatine und dem Pektin gebildeten Ganzen bezogen auf das Gesamtgewicht der Süßware, und
- wenigstens einer insbesondere aus Zitronensäure, Michsäure, Äpfelsäure und Weinsäure ausgewählten Säure.

4. Süßware nach einem der Ansprüche 1 bis 3, **dadurch gekennzeichnet, dass** sie einen insbesondere aus Polyolen wie etwa Glycerin, Polyethylenglycol (PEG), Maltit, Xylit und Sorbit ausgewählten Feuchtigkeitsstabilisator umfasst und dass sie vorzugsweise 1 bis 5 Gew.-% und vorzugsweise 3 Gew.-% des Feuchtigkeitsstabilisators bezogen auf das Gesamtgewicht der Süßware enthält.

5. Süßware nach einem der Ansprüche 1 bis 4, **dadurch gekennzeichnet, dass** sie wenigstens ein Fruchtaroma, insbesondere wenigstens ein Zitrusfruchtaroma, und wahlweise wenigstens ein Färbemittel umfasst.

6. Süßware nach einem der Ansprüche 1 bis 5, **dadurch gekennzeichnet, dass** sie eine Dichte von 0,13 bis 0,3 g/cm³, vorzugsweise von 0,2 bis 0,25 g/cm³ aufweist.

7. Süßware nach einem der Ansprüche 1 bis 6, **dadurch gekennzeichnet, dass** sie Gelatine mit einem Bloomwert von 100 g bis 300 g, insbesondere 125 g bis 275 g und vorzugsweise 180 g bis 250 g umfasst.

8. Süßware nach einem der Ansprüche 1 bis 7, **dadurch gekennzeichnet, dass** sie Gelatine mit einer Viskosität von 2,8 mPa·s bis 5 mPa·s umfasst, insbesondere bei einem Bloomwert von 180 bis 250 g.

9. Verfahren zur Zubereitung eines Artikels einer marshmallowartigen mit Luft versetzten Süßware nach einem der Ansprüche 1 bis 8, mit den folgenden Schritten:
a) einem Schritt, bei dem die Gelatine und das Pektin in Wasser aufgelöst werden,
b) einem Schritt, bei dem ein Zuckersirup und die am Ende von Schritt a) erhaltene Mischung gemischt werden,
c) einem Schritt, bei dem entweder am Ende von entweder Schritt a) oder Schritt b) und vorzugsweise am Ende von Schritt b) wenigstens eine insbesondere aus Zitronensäure, Michsäure, Äpfelsäure und Weinsäure ausgewählte Säure sowie bei Bedarf wenigstens ein Fruchtaroma sowie bei Bedarf wenigstens ein Färbemittel zugesetzt wird bzw. werden, und
d) einem Schritt, bei dem das am Ende des vorhergehenden Schrittes erhaltene Produkt aufgeschäumt wird.

10. Verfahren zur Zubereitung nach Anspruch 9, **dadurch gekennzeichnet, dass** Schritt a) auch das Auflösen wenigstens eines Zuckers in Wasser umfasst.

11. Verfahren zur Zubereitung nach Anspruch 9 oder 10, **dadurch gekennzeichnet, dass** Schritt a) in auf eine Temperatur von 80°C bis 90°C erwärmtem Wasser durchgeführt wird.

12. Verfahren zur Zubereitung nach einem der Ansprüche 9 bis 11, **dadurch gekennzeichnet, dass** der Zuckersirup zubereitet wird, indem wenigstens ein Zucker, Glucosesirup sowie bei Bedarf ein in Anspruch 4 definierter Feuchtigkeitsstabilisator mit Wasser gemischt werden und dass der Zuckersirup auf eine Temperatur von 120°C bis 130°C, vorzugsweise auf eine Temperatur von 126°C erwärmt wird und dass man ihn dann auf eine Temperatur von 80°C bis 110°C, vorzugsweise auf eine Temperatur von 100°C abkühlen lässt.

13. Verfahren zur Zubereitung nach einem der Ansprüche 9 bis 12, **dadurch gekennzeichnet, dass** auf Schritt b) ein Schritt folgt, bei dem die Mischung auf eine Temperatur von 50°C bis 70°C, vorzugsweise auf eine Temperatur von 60°C abgekühlt wird.

14. Verfahren zur Zubereitung nach einem der Ansprüche 9 bis 13, **dadurch gekennzeichnet, dass** auf Schritt c) ein Schritt folgt, bei dem gerührt wird, um ein homogenes Ganzes zu erhalten, dann ein Schritt, bei dem das homogene Ganze vorzugsweise bei kontinuierlichem Druck in eine Schäumvorrichtung überführt wird.

15. Verfahren zur Zubereitung nach einem der Ansprüche 9 bis 14, **dadurch gekennzeichnet, dass** es einen abschließenden Extrusionsschritt umfasst.

## Revendications

1. Confiserie aérée de type guimauve ayant une densité de 0,10 à 0,6 g/cm³, comprenant un réseau de gélatine aérée et comme stabilisant pour ledit réseau, 5 % à 20 % en poids de pectine pour 80 % à 95 % en poids de gélatine, ladite confiserie ayant un pH de 2,2 à 3,5.

2. Confiserie aérée de type guimauve selon la revendication 1, **caractérisée en ce que** la pectine a un temps de prise de 500 sec. ou plus.

3. Confiserie selon la revendication 1 ou 2, comprenant :
- de 3 % à 6 % en poids de l'ensemble formé par la gélatine et la pectine sur la base du poids total de ladite confiserie, et
- au moins un acide choisi en particulier parmi l'acide citrique, l'acide lactique, l'acide malique et l'acide tartrique.

4. Confiserie selon l'une quelconque des revendications 1 à 3, **caractérisée en ce qu'**elle comprend un stabilisant à l'humidité choisi en particulier parmi des polyols tels que le glycérol, le polyéthylène glycol (PEG), le maltitol, le xylitol et le sorbitol et **en ce qu'**elle contient de préférence de 1 % à 5 % et de préférence 3 % en poids dudit stabilisant à l'humidité sur la base du poids total de ladite confiserie.

5. Confiserie selon l'une quelconque des revendications 1 à 4, **caractérisée en ce qu'**elle comprend au moins un arôme de fruit, en particulier au moins un arôme d'agrume et éventuellement au moins un agent colorant.

6. Confiserie selon l'une quelconque des revendications 1 à 5, **caractérisée en ce qu'**elle a une densité de 0,13 à 0,3 g/cm³, de préférence de 0,2 à 0,25 g/cm³.

7. Confiserie selon l'une quelconque des revendications 1 à 6, **caractérisée en ce qu'**elle comprend de la gélatine ayant une efflorescence de 100 g à 300 g, en particulier de 125 g à 275 g et de préférence, de 180 g à 250 g.

8. Confiserie selon l'une quelconque des revendications 1 à 7, **caractérisée en ce qu'**elle comprend de la gélatine ayant une viscosité de 2,8 mPa.sec. à 5 mPa.sec., en particulier, pour une efflorescence de 180 à 250 g.

9. Procédé de préparation d'un article de confiserie aérée de type guimauve selon l'une quelconque des revendications 1 à 8, comprenant les étapes suivantes :
a) une étape de dissolution dans de l'eau de la gélatine et de la pectine,
b) une étape de mélange d'un sirop de sucre et du mélange obtenu à la fin de l'étape a),
c) une étape d'addition, à la fin soit de l'étape a), soit de l'étape b), et de préférence à la fin de l'étape b), d'au moins un acide choisi en particulier parmi l'acide citrique, l'acide lactique, l'acide malique et l'acide tartrique et si nécessaire, au moins un arôme de fruit et si nécessaire, au moins un agent colorant, et
d) une étape d'expansion du produit obtenu à la fin de l'étape précédente.

10. Procédé de préparation selon la revendication 9, **caractérisé en ce que** l'étape a) comprend également la dissolution d'au moins un sucre dans l'eau.

11. Procédé de préparation selon la revendication 9 ou 10, **caractérisé en ce que** l'étape a) est réalisée dans de l'eau chauffée à une température de 80 °C à 90 °C.

12. Procédé de préparation selon l'une quelconque des revendications 9 à 11, **caractérisé en ce que** le sirop de sucre est préparé en mélangeant au moins un sucre, du sirop de glucose et si nécessaire, un stabilisant à l'humidité tel que défini à la revendication 6, avec de l'eau et **en ce que** ledit sirop de sucre est chauffé à une température de 120 °C à 130 °C, de préférence, à une température de 126 °C et **en ce qu'**on le laisse ensuite refroidir à une température de 80 °C à 110 °C, de préférence à une température de 100 °C.

13. Procédé de préparation selon l'une quelconque des revendications 9 à 12, **caractérisé en ce que** l'étape b) est suivie d'une étape de refroidissement dudit mélange à une température de 50 °C à 70 °C, de préférence à une température de 60 °C.

14. Procédé de préparation selon l'une quelconque des revendications 9 à 13, **caractérisé en ce que** l'étape c) est suivie d'une étape d'agitation de façon à obtenir un ensemble homogène puis d'une étape de transfert dudit ensemble homogène dans un dispositif d'expansion, de préférence à une pression continue.

15. Procédé de préparation selon l'une quelconque des revendications 9 à 14, **caractérisé en ce qu'**il comprend une étape finale d'extrusion.
